# EUROPEAN PATENT APPLICATION

(11) **EP 4 180 495 A1**
(43) Date of publication of application: **17.05.2023**
(21) Application number: 21383023.5
(22) Date of filing: 12.11.2021
(51) Int. Cl.: C09J 175/14, C08G 18/75, C08G 18/42, C08G 18/67, B32B 7/12

(54) **REVERSIBLE ADHESIVE MATERIAL FOR APPLICATIONS IN PACKAGING RECYCLING**

(71) Applicant: Consejo Superior de Investigaciones Científicas (CSIC), 28006 Madrid (ES)
(72) Inventor: SALAVAGIONE, Horacio Javier, 28006 Madrid (AR); SEYLER, Helga, 28006 Madrid (DE); QUILEZ-DIAZ, Susana, 28006 Madrid (ES); GARY ELLIS, James, Madrid, 28006 (GB); SHUTTLEWORTH, Peter Samuel, Madrid, 28006 (GB); GOMEZ-FATOU RODRIGUEZ, Marián, 28006 Madrid (ES)
(74) Representative: Pons

(57) **Abstract**

The invention relates to a new adhesive material with a reversible adhesion/separation capability, which can be remotely triggered via an energy source and that will facilitate the recycling of multi-layered packaging and its procedure of obtainment from solventborne polyol and isocyanate components in a single step process, from solvent-free polyol and isocyanate components in a two-step process or from isocyanate components in a single step process.

## Description

The invention relates to a new adhesive material with a reversible adhesion/separation capability, which can be remotely triggered via an energy source and that will facilitate the recycling of multi-layered packaging and its procedure of obtainment from solvent-borne polyol and isocyanate components in a single step process, from solvent-free polyol and isocyanate components in a two-step process or from an isocyanate component in a single step process.

### STATE OF ART

Nowadays, materials used in packaging are complex systems due to the demanded requirements they must meet to envelop, enhance and protect the enclosed product at all stages of its production, from processing and manufacturing, through handling and storage, to presentation and use that meet the final consumer's expectations.

The use of multi-layered materials for packaging is widespread, especially in food and pharmaceuticals packaging, as it represents a common strategy that combines different polymer layers each with a specific function.

However, from an environmental point of view the multicomponent nature of these multi-layered materials makes them very difficult to recycle and thus are usually either incinerated or deposited in landfills after only one single use. The main reason for this resides in the impossibility to separate the different polymer layers, which prevents the recovery and reuse of each of the component materials.

Today there is no industrial solution available for multi-layered packaging recycling. To address this problem, two main strategies are envisaged: i) the development of innovative methods to separate the different components or ii) the combined processing of all the constituents, which limits the range of alternatives for posterior applications to down-cycling. Focusing on the former strategy, one promising approach is to modify the adhesive layer that binds the polymer layers together.

### DESCRIPTION OF THE INVENTION

The present invention discloses a new adhesive with a reversible adhesion/separation capability for packaging recycling applications made from a polyurethane (PU) adhesive comprising thermoreversible covalent bonds based on Diels-Alder adducts, which can be broken and this bond-splitting can be remotely triggered via an energy source, and graphene particles.

A first aspect of the present invention relates to a reversible adhesive material comprising
- a polyurethane matrix,
   ▪ formed from the reaction of an isocyanate compound in a range of between 55% and 99% in weight with respect to the mixture with a Diels-Alder adduct in a range of between 1% and 45% in weight with respect to the mixture;
      or
   ▪ formed from the reaction of a Diels Alder adduct in a range of between 1% and 15% in weight with respect to the mixture and a polyol compound in a range of between 5% and 40% in weight with respect to the mixture with an isocyanate compound in a range between 40% and 94% in weight with respect to the mixture;
      and
- graphene particles in a range of between 0.01% and 10% in weight of the total reversible adhesive material embedded within the polyurethane matrix.

The term "reversible adhesive material" as used herein refers to an adhesive system containing reversible covalent bonds that can be formed and broken on-demand.

The term "polyurethane" as used herein refers to the polymer obtained by the polymerization of the isocyanate component with a Diels-Alder adduct or a combination of a Diels-Alder adduct and a polyol component and via the formation of urethane linkages. All these reactions form a covalent network after a polymerization reaction. The polyurethane can be a thermoplastic or a thermoset. Furthermore, the polymer can also contain urea, allophanate, biuret, uretdione, carbodiimide, isocyanurate and other bond types typically obtained during the polymerization process.

The term "polyol" as used herein includes any organic compound having on average more than one and preferably at least two, and preferably no more than four, isocyanate-reactive hydroxyl moieties.

Preferable polyols useful in the present invention are selected from aliphatic, aromatic, bifunctional or multifunctional, linear or branched, sulfonated, solvent-borne in water or in organic solvents such as alcohols (ethanol, isopropanol, butanol, propanol, furfuryl alcohol), linear or cyclic esters (ethyl acetate, propyl acetate, epsilon-caprolactone, benzyl acetate, butyl acetate), aromatic solvents (toluene, xylene), linear o cyclic ketones (acetone, methyl ethyl ketone, methyl isobutyl ketone, cyclohexanone), ethers (tetrahydrofurane, 2-methyl tetrahydrofurane) aliphatic hydrocarbons and mixtures thereof, and solvent-free polyols, and any combination thereof. Polyols includes, for example, polyether polyols, polyester polyols, poly(alkylene carbonate)polyols, hydroxyl-containing polythioethers, and any combination thereof.

The term "isocyanate" as used herein refers to 5-naphthylene diisocyanate, 4,4'-diphenylmethane diisocyanate (MDI), 1,4-phenylene diisocyanate, the isomers of tolulene diisocyanate (TDI), xylylene diisocyanate (XDI), tetramethylxylylene diisocyanate (TMXDI), hexane 1,6-diisocyanate (HDI), 1,1'-methylenebis[4-isocyanatobenzene] polymer, 4,4'-diphenyldimethylmethane diisocyanate, di- and tetra-alkylenediphenylmethane diisocyanate, 4,4'-dibenzyl diisocyanate, 1,3-phenylene diisocyanate, isocyanurate, 1-methyl-2,4-diisocyanatocyclohexane, 1,6-diisocyanato-2,2,4-trimethylhexane, 1,6-diisocyanato-2,4,4-trimethylhexane, 1-isocyanatomethyl-3-isocyanato-1,5,5-trimethylcyclohexane (IPDI), tetramethoxybutane 1,4-diisocyanate, butane 4-diisocyanate, dicyclohexylmethane diisocyanate, cyclohexane 1,4-diisocyanate, ethylene diisocyanate, bisisocyanatoethyl phthalate in the form of free or blocked isocyanates, monomers, dimers, oligomers, pre-polymers or polymers containing multiple isocyanate groups and their mixtures and mixtures with polyols and organic acids, including their solvent-borne formulations in water or organic solvents such as alcohols (ethanol, isopropanol, butanol, propanol, furfuryl alcohol), linear or cyclic esters (ethyl acetate, propyl acetate, epsilon-caprolactone, benzyl acetate, butyl acetate), aromatic solvents (toluene, xylene), linear o cyclic ketones (acetone, methyl ethyl ketone, methyl isobutyl ketone, cyclohexanone, dihydrolevoglucosenone), ethers (tetrahydrofurane, 2-methyl tetrahydrofurane) aliphatic hydrocarbons and mixtures thereof and solvent-free formulations.

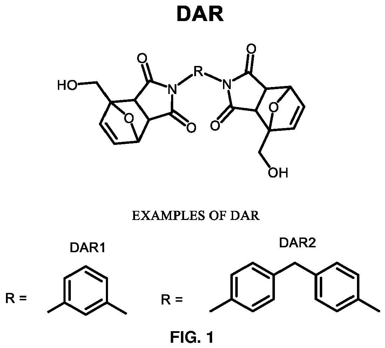

The term "Diels-Alder adduct" as used herein refers to diols, as can be seen in Fig. 1, with the group R being of aromatic or aliphatic nature or a combination thereof. Said Diels-Alder adducts are prepared by coupling furfuryl alcohol with a bismaleimide, where R comprises functional groups such as 1,2-ethyl, 1,3-phenylene, 4-methyl-1,3-phenylene, 1,1'-methylenedi-4,1-phenylene, 3,3'-dimethyl-1,1'-biphenyl-4,4'-diyl, 1,3-phenylene, diphenyl ether, sulphonyl diphenylene, dithioethyl, diethyleneglycol, triethyleneglycol. Particularly to illustrate the present invention, R is selected from 1,3-phenylene and 1,1'-methylenedi-4,1-phenylene groups, whereby *N*,*N'*-(1,3-phenylene)dimaleimide is employed to form the Diels-Alder adduct 2,2'-(1,3-phenylene)bis(4-(hydroxymethyl)-3a,4,7,7a-tetrahydro-1H-4,7-epoxyisoindole-1,3(2H)-dione) (DAR1) or 1,1'-(methylenedi-4,1-phenylene)bismaleimide is employed to form the Diels-Alder adduct 2,2'-(methylenebis(4,1-phenylene))bis(4-(hydroxymethyl)-3a,4,7,7a-tetrahydro-1H-4,7-epoxyisoindole-1,3(2H)-dione) (DAR2). The Diels-Alder adducts are homogeneously or selectively distributed within the polyurethane matrix.

The term "graphene particles" as used herein refers to graphene-like materials in the form of single layer, few layers or multilayer sheets, nanoplatelets, platelets, graphite, reduced graphene oxide, and the like. The particle lateral dimensions can range from 100 nm to 100 microns and particle thickness can range between 1 to 10 nanometers. The particles can be employed in powdered form or as dispersions in water or an organic solvent such as linear o cyclic amides (1-methyl-2-pyrrolidone, 1-ethyl-2-pyrrolidone, 2-pyrrolidone, 1-octyl-2-pyrrolidone, 1-vinyl-2-pyrrolidone, 1-cyclohexyl-2-pyrrolidone, 1-dodecyl-2-pyrrolidinone, N,N-dimethylformamide) ketones (acetone, methyl ethyl ketone, methyl isobutyl ketone, cyclohexanone, dihydrolevoglucosenone); alcohols (ethanol, isopropanol, butanol, propanol, furfuryl alcohol); linear or cyclic esters (ethyl acetate, propyl acetate, epsilon-caprolactone, benzyl acetate, butyl acetate, benzyl benzoate, triacetin); aromatic solvents (toluene, xylene), dihydrolevoglucosenone, ethers (tetrahydrofurane, 2-methyl tetrahydrofurane, cyclopentyl methyl ether) aliphatic hydrocarbons, and dimethylsulfoxide. The particles are homogeneously or selectively distributed in the polyurethane matrix, as single layers, multilayers or aggregates. These particles act as radiation absorbers to generate hot-spots in the material that result in a rapid and even heating of the adhesive upon irradiation.

The adhesive of the present invention presents new, externally triggered on-demand debonding properties, making them potential replacements for standard adhesives used in multi-layered packaging applications. In particular, the new adhesives maintain their bonding functionality during the desired application, but provide the possibility to significantly reduce this on demand, facilitating post-consumer recovery of the packaging components, their reprocessing and their reuse. The new adhesives incorporate a reversible bonding/debonding capability that can be switched by controlling the temperature leading to splitting/reconstructing the covalent bonds within the polymer network. Furthermore, the breaking of the covalent bonds in the network increases the fluidity of the adhesive, helping the multilaminate debonding process. Bond splitting can be achieved in less than 15 min by thermal treatment of the samples at temperatures between 90 - 160 ºC. Particularly, this bond-opening can be remotely triggered using electromagnetic radiation, in tens of seconds due to the photothermal effect of the graphene particles. A further advantage of the invention is that the process to obtain the adhesive can be applied to commercially available one- or two-component polyurethane adhesives without the need for reformulating the individual polyol or isocyanate components. These new adhesives can be used to facilitate the separation of the polymer layers in multi-layered laminated and flexible packaging, opening the door to the recovery and reuse of the individual layers. One of the main aims of our invention is to provide a means to tackle the recycling problem of polymer based multi-layered packaging in the food and pharmaceutical sectors, whereby the recovered individual polymer layers can be reused in the same sector or employed for other applications, providing a circular economy solution.

In a preferred embodiment of the reversible adhesive material, the polyol compound is selected from polyether polyols, polyester polyols, poly(alkylene carbonate)polyols, hydroxyl-containing polythioethers, polymer polyols, and any combination thereof. In a more preferably embodiment, the polyol is solvent-borne in water, in organic solvents, solvent-free polyols, and any combination thereof.

In a preferred embodiment, the isocyanate compound is selected from 5-naphthylene diisocyanate, 4,4'-diphenylmethane diisocyanate (MDI), 1,4-phenylene diisocyanate, the isomers of tolulene diisocyanate (TDI), xylylene diisocyanate (XDI), tetramethylxylylene diisocyanate (TMXDI), hexane 1,6-diisocyanate (HDI), 1,1'-methylenebis[4-isocyanatobenzene] polymer, 4,4'-diphenyldimethylmethane diisocyanate, di- and tetra-alkylenediphenylmethane diisocyanate, 4,4'-dibenzyl diisocyanate, 1,3- phenylene diisocyanate, isocyanurate, 1-methyl-2,4-diisocyanatocyclohexane, 1,6-diisocyanato-2,2,4-trimethylhexane, 1,6-diisocyanato-2,4,4-trimethylhexane, 1-isocyanatomethyl-3-isocyanato-1,5,5-trimethylcyclohexane (IPDI), tetramethoxybutane 1,4-diisocyanate, butane 4-diisocyanate, dicyclohexylmethane diisocyanate, cyclohexane 1,4-diisocyanate, ethylene diisocyanate, bisisocyanatoethyl phthalate, more preferably the isocyanate is in the form of free or blocked isocyanates, monomers, dimers, oligomers, pre-polymers or polymers containing multiple isocyanate groups and their mixtures and mixtures with polyols and organic acids.

In another preferred embodiment, the polyol and isocyanate components are solvent-free or solvent borne formulations. In a more preferred embodiment, the solvent is ethyl acetate.

In a preferred embodiment, the Diels-Alder adduct is selected from a compound of formula (I) 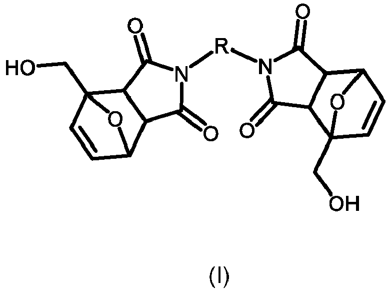 wherein: R is, for example, ethylene, 1,2-ethyl, 1,3-phenylene, 4-methyl-1,3-phenylene, 1,1'-methylenedi-4,1-phenylene, 3,3'-dimethyl-1,1'-biphenyl-4,4'-diyl, 1,4-phenylene, diphenylene ether, sulphonyl diphenylene, dithioethylene, diethyleneglycol, triethyleneglycol.

In another preferred embodiment, the reversible adhesive material further comprises an additive component selected from a chain stopper, a lubricant, a solubilizing additive or a combination thereof. In a more preferred embodiment, the reversible adhesive material further comprises furfuryl alcohol in contents between 0.01% and 3% in weight of the total of the reversible adhesive. The additive assists the incorporation of the adduct and favour the reversibility of the adhesive.

A second aspect of the present invention relates to a process of obtainment of a reversible adhesive material, wherein the process comprises at least the following steps:
a) mixing a Diels-Alder adduct and graphene particles in powder form or as a dispersion in solvents selected from water, alcohols, ethers, esters, lactones, ketones, pyrrolidones, aromatic solvents, aliphatic hydrocarbons, amides and any combination thereof and, optionally, a polyol in water, in organic solvents, solvent-free polyols, and any combination thereof;
b) adding an isocyanate compound to the mixture obtained in step (a) in water, in organic solvents selected from alcohols linear or cyclic esters, aromatic solvents, linear o cyclic ketones, ethers, aliphatic hydrocarbons and mixtures thereof, and solvent-free formulations;
c) curing the obtained mixture in step (b) during a period between 2 and 7 days at temperatures between 20 ºC and 50 ºC

In another more preferred embodiment, step (a) and (b) is merged in a single pot procedure when no polyol is added.

In another more preferred embodiment, the polyol compound is mixed in step (a), step (a) and (b) are merged in a single pot procedure when graphene is added as a dispersion in a solvent, to solvent-borne polyol and isocyanate components.

In a preferred embodiment, adding an additive component selected from chain stopper, lubricant, solubilizing additive or combination thereof in step (a). In a more preferred embodiment, the additive is furfuryl alcohol and is added in a range between 0.01% and 3% in weight of the total mixture in step (a).

A third aspect of the invention refers to use of the reversible adhesive material of the present invention to aid as flexible packaging recycling in the food or pharmaceutical industries.

As the majority of packaging films are multi-layer structures ranging from 3 to 12 or more layers, a fourth aspect of the invention relates to a material for recyclable packaging that comprises at least one layer of the reversible adhesive material described in the present invention located between at least two layers of a polymer material (i.e. 3-layer) selected from polyolefins, bio-based polyolefins, recycled polyolefins, biodegradable polyolefins, polyesters, bio-based polyesters, recycled-polyesters, biodegradable polyesters, vinyl polymers, metals, polyamides, polystyrene or a combination thereof, whereby for structures with more than 3-layers, each of the polymers sheets are stuck to both sides of the reversible adhesive.

A fifth aspect of the invention relates to the process of splitting the covalent bonds of the reversible adhesive material by heating the reversible adhesive material described above at temperatures of between 90 ºC and 160 ºC for a time of between 3 min and 30 min.

The above described splitting changes the fluidity of the sample because it breaks the adhesive network to produce a sudden drop in the molecular weight of the adhesive.

A sixth aspect of the invention relates to a process of remotely splitting of the covalent bonds via the photothermal effect triggered by applying an electromagnetic radiation source for a time of between 30 s and 150 s.

In a preferred embodiment the electromagnetic source is an infrared source with a broadband energy output between 600 and 4000 nm. In another preferred embodiment the electromagnetic source is a microwave radiation of between 1W and 1200W.

A seventh aspect of the invention relates to a process of re-forming the covalent bonds within the adhesive by treating the reversible adhesive materials between 20ºC and 60ºC for a time between 1 hour and 3 days.

A eighth aspect of the invention relates to a process where the splitting/re-forming of the covalent bonds described above in the present invention within the reversible adhesive materials can be repeated from 2 to 20 times in an alternating manner.

Unless otherwise defined, all technical and scientific terms used herein have the same meaning as commonly understood by one skilled in the art to which this invention belongs. Methods and materials similar or equivalent to those described herein can be used in the practice of the present invention. Throughout the description and claims the word "comprise" and its variations are not intended to exclude other technical features, additives, components, or steps. Additional objects, advantages and features of the invention will become apparent to those skilled in the art upon examination of the description or may be learned by practice of the invention. The following examples and drawings are provided by way of illustration and are not intended to be limiting of the present invention.

### BRIEF DESCRIPTION OF THE DRAWINGS

**FIG. 1****.** Chemical structures of the Diels-Alder adducts.
**FIG. 2****.** Scanning electron micrographs (cross section) of the reversible adhesives (1.4 wt% adduct) without particles (a) and with graphene particles (0.25 wt%) (b and c).
**FIG. 3****.** Schematic representation of (a) the preparation of a reversible adhesives containing adduct and graphene particles, and (b) reversible splitting of the covalent bonds.
**FIG. 4****.** (a) Photothermal effect of the graphene particles within the polyurethane reversible adhesive (6.9 wt% adduct) on the surface temperature as a function of particle loading and irradiation time (GP: graphene platelets). (b) Attenuated Total Reflectance Fourier Transform Infrared (ATR-FTIR) spectra. BMI signal evolution as a function of the irradiation time for a sample containing 6.9 wt% DAR2 and 0.25 wt% graphene particle loading.
**FIG. 5****.** ATR-FTIR spectra of the reversible adhesive prior to (dashed line) and after (continuous line) bond splitting using electromagnetic radiation (infrared-lamp, 90 s) and after network reconstruction (grey). Reversibility of the bond splitting and reconstruction shown for three cycles.
**FIG. 6****.** (A) Differential scanning calorimetry (DSC) scans showing the cyclability of the splitting/re-forming cycles of polyurethane reversible adhesive containing DAR1. (B) Variation of the splitting enthalpy for consecutive splitting/re-forming cycles of polyurethane reversible adhesive containing DAR1.
**FIG. 7****.** Elongation of adhesives as a function of the irradiation time for (a) the original polyurethane adhesive (0 wt% adduct, 0 wt% graphene particles) and (b) reversible adhesive containing Diels-Alder adduct DAR2 (6.9 wt%) and graphene particles (0.25 wt%).

### EXAMPLES

### Example 1

Process for obtainment of the reversible adhesive material in two steps from solvent-free components, containing 6.9 wt. % adduct 1,1'-(methylenedi-4,1-phenylene)bismaleimide is employed to form the Diels-Alder adduct, 2,2'-(methylenebis(4,1-phenylene))bis(4-(hydroxymethyl)-3a,4,7,7a-tetrahydro-1H-4,7-epoxyisoindole-1,3(2H)-dione) (DAR2) (Fig. 1) and 0.25 wt. % graphene.

Step (a): the polyol, a saturated polyester based on the reaction of adipic acid with trimethylol propane and mono propylene glycol, (EW: 303 g/eq, 1.09 g), the adduct DAR2 containing thermoreversible bonds (EW: 277.3, 235.4 mg), graphene platelets (8.5 mg) and furfuryl alcohol (73.4 uL) are mixed using a planetary centrifugal mixer according to the following programme: 9 min at 2000 rpm and 9 min at 2200 rpm.

Step (b): the isocyanate, a 1,1'-methylenebis(4-isocyanatobenzene) polymer with 1,2-propanediol and hexanoic acid, (EW:290 g/eq, 2 g), is mixed with the dispersion prepared in step (a) according to the following programme: 6 min at 2000 rpm and 6 min at 2200 rpm. The mixture is cured during 20 h at 50 °C and 6 days at RT.

### Example 2

Process for obtainment of the reversible adhesive material in a single pot from solvent-borne components in ethyl acetate, 1.4 wt. % adduct, 2,2'-(1,3-phenylene)bis(4-(hydroxymethyl)-3a,4,7,7a-tetrahydro-1H-4,7-epoxyisoindole-1,3(2H)-dione) DAR1 (Fig.1) and 0.25 wt. % graphene.

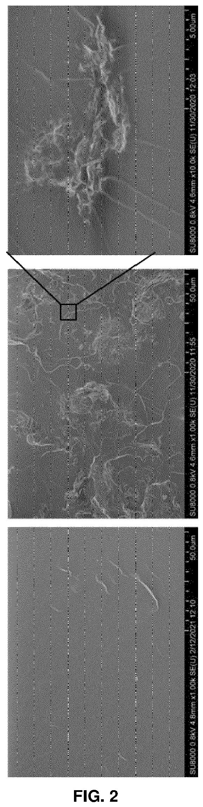

Step (a): the polyol, a saturated polyester based on the reaction of adipic acid with trimethylol propane and mono propylene glycol(EW: 748 g/eq, 0.2 g), the adduct DAR1 containing thermoreversible bonds (EW: 232.2, 31 mg), the graphene dispersion in ethyl acetate (1.75 mg/mL, 2 mL), furfuryl alcohol (11.6 uL) and the isocyanate, a 1,1'-methylenebis(4-isocyanatobenzene) polymer with 1,2-propanediol and hexanoic acid(EW: 2470.6 g/eq, 2g) are mixed using a planetary centrifugal mixer according to the following programme: 60s at 500 rpm, 20 s at 2000 rpm, 60 s at 2200 rpm and 30 s at 1000 rpm. The obtained reversible adhesive material can be seen in Fig. 2. The mixture is cured during 20 h at 50 °C and 6 days at RT.

### Example 3

Process for obtainment of the reversible adhesive material in a single pot from a solvent-borne isocyanate compound, a 1,1'-methylenebis(4-isocyanatobenzene) polymer with 1,2-propanediol and hexanoic acid, in ethyl acetate, 7.7 wt% adduct DAR2 and 0.27 wt.% graphene. Step (a): the adduct DAR2 (EW: 277.3, 100 mg), the isocyanate (EW: 2470.6 g/eq, 2 g) and a graphene dispersion in ethyl acetate (0.088 mg/mL, 40 mL) are mixed using a planetary centrifugal mixer according to the following programme: 60 s at 500 rpm, 20 s at 2000 rpm, 60 s at 2200 rpm and 30 s at 1000 rpm. The mixture is cured during 20 h at 50 °C and 6 days at RT.

### Example 4

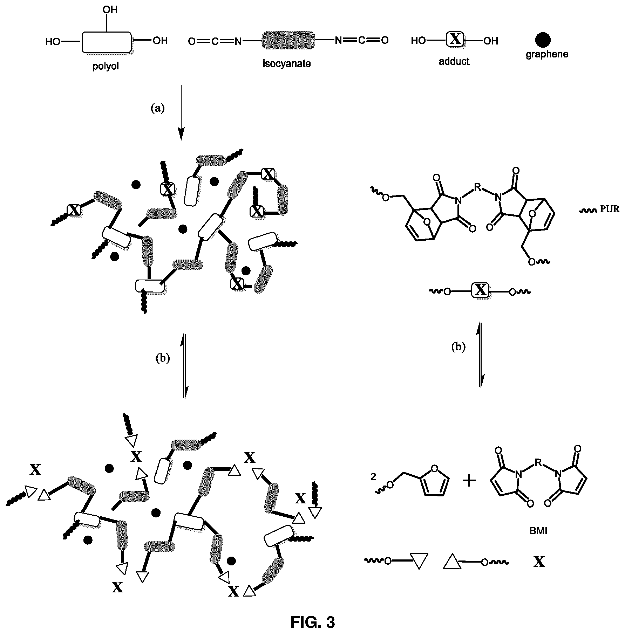

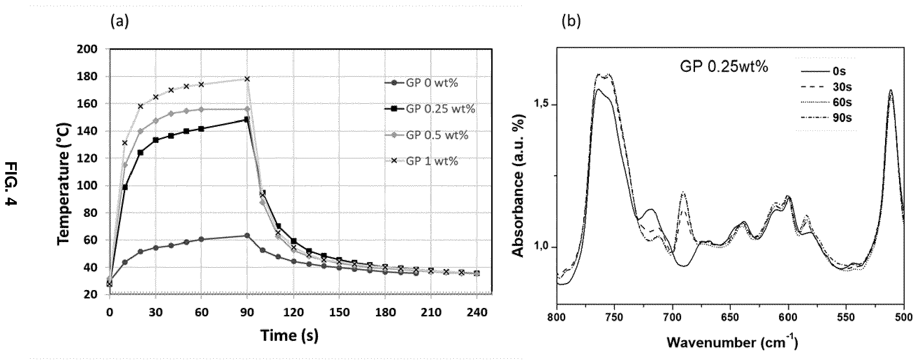

Remote covalent bond splitting (Fig. 3) was achieved by heating the adhesive via illumination with an IR-lamp (250W, sample to lamp distance 6 cm). The surface temperature was monitored as a function of illumination time and is represented in Fig. 4(a). The sample (~ 150µm) rapidly exceeds 90 °C, inducing the bond splitting reaction (retro-Diels Alder). On the other hand, the control sample without graphene particles, does not heat up sufficiently to start the bond splitting reaction. The conversion of the splitting was monitored via ATR-FTIR by recording the changes for the BMI signal (Fig. 4(b)). For example, maximum conversion was obtained in 60 s for a reversible adhesive containing graphene obtained in Example 1 with a solvent-free polyol and isocyanate components. Control samples without graphene particles showed negligible changes in the BMI signal upon illumination. Therefore, fast changes in the physical properties of the reversible adhesives containing graphene can be obtained in short time periods, which is important for rapid industrial debonding of multi-layer laminates.

### Example 5

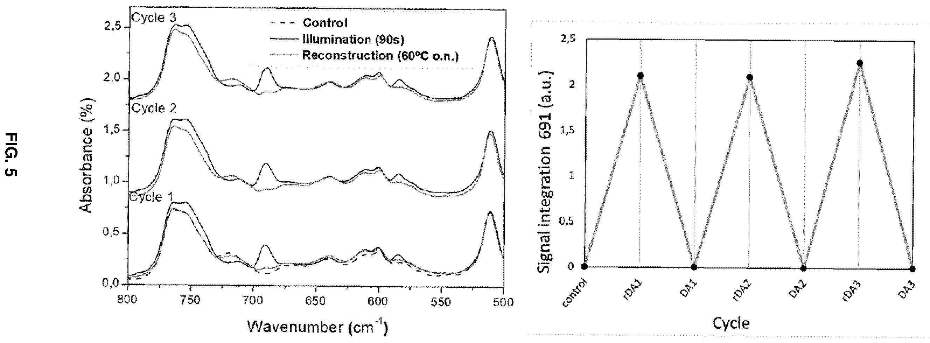

The reversibility of the covalent bond splitting and re-forming was evaluated by subjecting the material to three cycles of the following treatment: (a) illumination with an IR lamp during 90s and (b) isothermal treatment overnight in an oven at 60 °C. Monitorization of the changes of the BMI signal at 691 cm⁻¹ in the ATR-FTIR spectra represented in Fig. 5 show that the network can be repeatedly dissociated on-demand liberating the BMI moiety and then reconstructed by reaction of the BMI with the polyurethane.

### Example 6

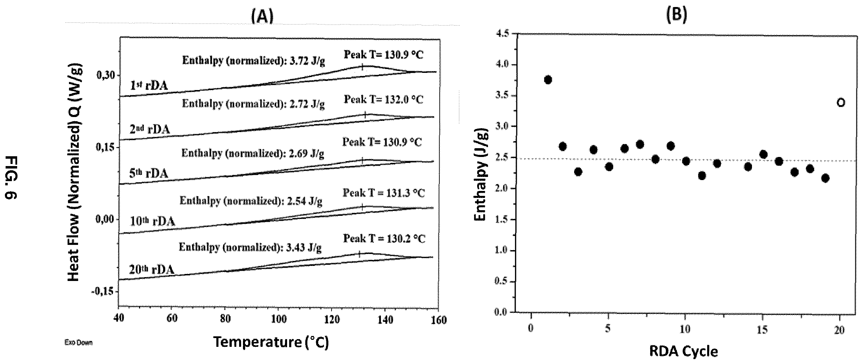

The cyclability of the splitting/re-forming of the covalent bonds was evaluated for the reversible adhesive material prepared in a single pot from solvent-borne components in ethyl acetate and 2.6 wt% adduct DAR1. The material was placed in a hermetic aluminium pan and subjected to 19 cycles of the following thermal treatment: (a) from 40 °C to 160 °C at 10°C /min and (b) isothermal treatment overnight at 60 °C. For step (b) from the 20^{th} cycle, the sample was left at room temperature for one month. Monitorization via DSC (Fig. 6a) shows that the enthalpy calculated for the rDA for each cycle during the step (a) reaches on average 66% of the initial value (Fig. 6b). This result highlights the possibility for the adhesive system to be reused many times.

### Example 7

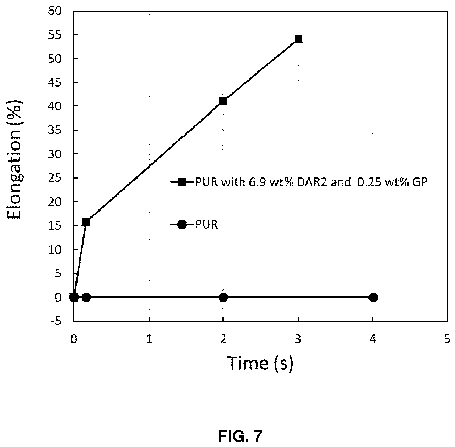

Remote covalent bond splitting was achieved by heating the adhesive via illumination with an IR-lamp (250W, sample to lamp distance 6 cm). The changes in sample fluidity for the sample containing the adduct and graphene particles was evaluated by suspending the sample (0.9 cm × 4.5 cm) and attaching a weight (32 g) to one end. The deformation of the sample was monitored by recording the elongation of the samples during illumination. Fig. 7 shows the changes in elongation for the adhesive material containing graphene and adduct DAR2 as well as the original formulation without adduct and graphene. For example, an elongation of 54% was obtained after 3 min illumination of the reversible adhesive containing graphene obtained in example 1 from a solvent-free polyol and isocyanate components. On the other hand, the commercial polyurethane adhesive did not suffer any deformation. The strong and rapid effect of the electromagnetic radiation on the fluidity of the reversible adhesive facilitates the debonding of polymer multi-layer laminates.

## Claims

1. A reversible adhesive material comprising
• a polyurethane matrix,
▪ formed from the reaction of an isocyanate compound in a range of between 55% and 99% in weight with respect to the mixture with a Diels-Alder adduct in a range of between 1% and 45% in weight with respect to the mixture;
or
▪ formed from the reaction of a Diels Alder adduct in a range of between 1% and 15% in weight with respect to the mixture and a polyol compound in a range of between 5% and 40% in weight with respect to the mixture with an isocyanate compound in a range between 40% and 94% in weight with respect to the mixture;
and
• graphene particles in a range of between 0.01% and 10% in weight of the total reversible adhesive material embedded within the polyurethane matrix.

2. The material according to claim 1, wherein the polyol compound is selected from polyether polyols, polyester polyols, poly(alkylene carbonate)polyols, hydroxyl-containing polythioethers, polymer polyols, and any combination thereof, preferably the polyol is solvent-borne in water, in organic solvents, solvent-free polyols, and any combination thereof.

3. The material according to any of claims 1 to 2, wherein the isocyanate compound is an isocyanate selected from 5-naphthylene diisocyanate, 4,4'-diphenylmethane diisocyanate (MDI), 1,4-phenylene diisocyanate, the isomers of tolulene diisocyanate (TDI), xylylene diisocyanate (XDI), tetramethylxylylene diisocyanate (TMXDI), hexane 1,6-diisocyanate (HDI), 1,1'-methylenebis[4-isocyanatobenzene] polymer, 4,4'-diphenyldimethylmethane diisocyanate, di- and tetra-alkylenediphenylmethane diisocyanate, 4,4'-dibenzyl diisocyanate, 1,3- phenylene diisocyanate, isocyanurate, 1-methyl-2,4-diisocyanatocyclohexane, 1,6-diisocyanato-2,2,4-trimethylhexane, 1,6-diisocyanato-2,4,4-trimethylhexane, 1-isocyanatomethyl-3-isocyanato-1,5,5-trimethylcyclohexane (IPDI), tetramethoxybutane 1,4-diisocyanate, butane 4-diisocyanate, , dicyclohexylmethane diisocyanate, cyclohexane 1,4-diisocyanate, ethylene diisocyanate, bisisocyanatoethyl phthalate, preferably in the form of free or blocked isocyanates, monomers, dimers, oligomers, pre-polymers or polymers containing multiple isocyanate groups and their mixtures and mixtures with polyols and organic acids, including their solvent-borne formulations in water or organic solvents such as alcohols, linear or cyclic esters, aromatic solvents, linear o cyclic ketones, ethers aliphatic hydrocarbons and mixtures thereof and solvent-free formulations..

4. The material according to any of claims 1 to 3, wherein the Diels-Alder adduct is selected from a compound of formula (I) 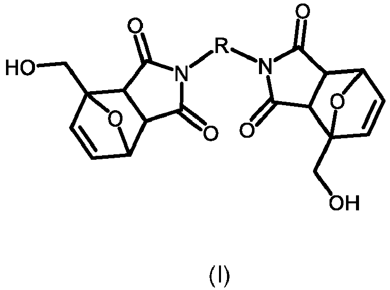 wherein: R is ethylene, 1,2-ethyl,, 1,3-phenylene, 4-methyl-1,3-phenylene, 1,1'-methylenedi-4,1-phenylene, 3,3'-dimethyl-1,1'-biphenyl-4,4'-diyl, 1,4-phenylene, diphenylene ether, sulfonyl diphenylene, dithioethylene, diethyleneglycol or triethyleneglycol, preferably R is 1,3-phenylene or 3,3'-dimethyl-1,1'-biphenyl-4,4'-diyl.

5. The material according to any of claims 1 to 4, wherein it further comprises an additive component selected from a chain stopper, a lubricant, a solubilizing additive or combinations thereof.

6. The material according to claim 5, wherein the additive is furfuryl alcohol in contents between 0.01% and 3% in weight of the total of the material.

7. A process of obtainment of the reversible adhesive material according to any of claims 1 to 6, wherein the process comprises:
a) mixing a Diels Alder adduct and graphene particles in powder form or as a dispersion in water, in organic solvents selected from alcohols, ethers, esters, lactones, ketones, pyrrolidones and any combination thereof; and, optionally, a polyol in water, in organic solvents, solvent-free polyols, and any combination thereof;
b) adding an isocyanate compound to the mixture obtained in step (a) in water, in organic solvents selected from alcohols linear or cyclic esters, aromatic solvents, linear o cyclic ketones, ethers, aliphatic hydrocarbons and mixtures thereof, and solvent-free formulations;
c) curing the obtained mixture in step (b) during a period between 2 and 7 days at temperatures between 20 ºC and 50 ºC.

8. The process according to claim 7, wherein step (a) and (b) is combined in single step in compositions without polyol.

9. The process according to claim 7, wherein the polyol compound is mixed in step (a), step (a) and (b) is merged in a single pot procedure when graphene is added as a dispersion in a solvent, to solvent-borne polyol and isocyanate components.

10. The process according to any of claims 7 to 9, wherein further comprises adding an additive component selected from chain stopper, lubricant, solubilizing additive or combination thereof in step (a).

11. The process according to claim 10, wherein the additive is furfuryl alcohol, and adding between 0.01% and 3% in weight of the total mixture in step (a).

12. Use of the reversible adhesive material according to any claims 1 to 6 as packaging recycling in food or pharmaceutical industry.

13. An article for recycling packaging that comprises at least one layer of the reversible adhesive material described in any claims 1 to 6 located between at least two layers of a metallic and/or polymeric material, preferably the polymer is selected from polyolefins, bio-based polyolefins, recycled polyolefins, biodegradable polyolefins, polyesters, bio-based polyesters, recycled-polyesters, biodegradable polyesters, vinyl polymers, polyamides, polystyrene or a combination thereof, whereby for structures with more than 3-layers, each of the polymer sheets are stuck to both sides of the reversible adhesive.

14. Process of splitting the covalent bonds within the reversible adhesive material of the article described in claim 13 that comprises the heating the article at temperature of between 90 ºC and 160 ºC for a time of between 3 min and 30 min.

15. Process of splitting the covalent bonds within the reversible adhesive material of the article described in claim 13, that comprises applying electromagnetic radiation at (the article or film) for a time of between 30 s and 150 s, triggering the photothermal effect imparted by the graphene of the reversible adhesive material.
